# EUROPEAN PATENT SPECIFICATION

(11) **EP 2 148 120 B1**
(45) Date of publication and mention of the grant of the patent: **20.06.2012**
(21) Application number: 09166124.9
(22) Date of filing: 22.07.2009
(51) Int. Cl.: F16L 27/053

(54) **Swiveling body for a pressure conduit**
Schwenkkörper für eine Druckleitung
Corps pivotant pour conduite sous pression

(30) Priority: 23.07.2008 NL 2001851
(43) Date of publication of application: 27.01.2010
(73) Proprietor: IHC Holland IE B.V., 3361 EP Sliedrecht (NL)
(72) Inventor: Taanman, Jan Maarten, 3317 PD Dordrecht (NL); Breken, Roelof, 4207 TD Gorinchem (NL)
(74) Representative: Ketelaars, Maarten F.J.M.

(56) References cited:
- DE-C- 821 890
- NL-C- 58 182
- US-A- 4 068 868
- US-A- 4 173 360
- US-A- 5 048 873

## Description

### Background of the invention

The invention relates to a swiveling body for a pressure conduit.

The invention further relates to a ring assembly for a swiveling body according to the invention.

The invention further relates to a pipe-end for a swiveling body according to the invention.

The invention further relates to a pedestal for a swiveling body according to the invention.

The invention further relates to a method for assembling a swiveling body according to the invention.

The invention further relates to the use of a swiveling body in a pressure conduit.

A swiveling body for a pressure conduit is known in the prior art. Such a swiveling body connects pipe sections and permits the mutual rotation around a central axis and a limited rotation in relation to the central axis. The rotation around the axis is essentially unrestricted, whereas the rotation in relation to the central axis is generally less than 5°. These swiveling bodies are designed as ball-joints wherein the forces exerted upon the swiveling body, resulting among other things from the pressure in the pressure conduit, are absorbed by the spherical surface. A drawback is that when pressure increases in the pressure conduit, the entire swiveling body needs to be scaled up in order to maintain loads at an equal level. Among other things, this has the drawback that an increased material use and design volume is required.

NL58182 discloses a ball joint for coupling a suction arm of a dredger to a floating pipeline. Up scaling of this known ball joint, for example with respect to the allowable pressure in the interior of the joint, will lead to a large and therefore unfavorable ball joint.

Both US4068868 and US4173360 disclose a flexible joint with a layered elastomeric bearing assembly. The flexible joint is suitable for joining tubular sections and permits relative tilt of these tubular sections. The relative tilt is allowed by shear within the layered elastomeric bearing assembly. The outermost and innermost layers of each bearing assembly are made of elastomeric materials, such layers are secured, as

by vulcanizing, to the surfaces of the housing members and bodies against which they bear. Moreover the elastomeric and rigid layers are also being suitably secured to one another, as by vulcanization. Therefore only relative small tilting angles are allowed making this flexible joint unsuitable for a swiveling body for coupling a discharge bend to a dredger or vessel, because in use the discharge bend with the floating pipeline will need to be rotatable over up to for example 180° with respect to the vessel. In addition, the layered elastomeric bearing assembly acts like a spring that will transfer undesired loads to the vessel depending on the position of the joint rendering the dredging process less controllable.

DE821890 discloses another similar joint.

### Summary of the invention

An object of the invention is to provide an improved swiveling body, wherein at least one the drawbacks mentioned is eliminated, either entirely or partially.

To this end, the invention provides a swiveling body according to claim 1

The ability of the ring assembly to swivel in relation to both coupling members permits them to roll off their mutual rotation across a larger radius, thus enabling axial forces to be distributed in a material-efficient manner. The coupling members are mutually connected by means of the swiveling body, specifically held together by the swiveling body and, more specifically, are pivotably clamped to each other by means of the swiveling body. The invention provides a first and a second ball-joint, notably between the upstream coupling member and the swiveling body, and between the downstream coupling member and the swiveling body.

According to the invention, a respective coupling member is, near a pipe wall, provided with a surrounding collar substantially within the ring assembly, wherein the collar has a curvature radius and the respective centre of the curvature radius lies on the central axis outside the central pivoting point. Preferably, both surrounding collars are positioned essentially within the ring assembly. The application of a collar with a different curvature radius enables the swiveling body to be optimized with regard to the axial loads resulting from the pressure in the pressure conduit. This optimization can be independent of the determination of the degree of freedom, here the definition of the mutual movements of the coupling members.

According to the invention, the centre of the curvature radius lies beyond the central pivoting point. As a result, the inner circumference of the collar runs more perpendicular to the central axis, which is a favorable starting point for absorbing axial forces resulting from the pressure in the pressure lines.

In an embodiment of a swiveling body according to the invention, the ring assembly is slidable in relation to both coupling members, essentially transversely in relation to the central axis.

In an embodiment of a swiveling body according to the invention the swiveling body further comprises:
- a ball segment within the ring assembly and fixedly connected to a coupling member,
- an accommodation fixedly connected to the other coupling member with a cupular member for accommodating the ball segment therein,
wherein the ball segment defines, in conjunction with the accommodation, the central pivoting point around which the coupling members are pivotable. Among other things, the ball segment and the housing both distribute radial forces.

In an embodiment of a swiveling body according to the invention, the accommodation further comprises a cylindrical member to guide the ball segment towards the cupular member. Said cylindrical member renders the ball segment and the housing particularly suitable for distributing radial forces.

In an embodiment of a swiveling body according to the invention, the radius of the pressure conduit is smaller than the radius of the ball segment, and the radius of the ball segment is smaller than the curvature radius of the collar. This means that, among other things, optimization with regard to axial forces is independent of the definition of the mutual pivoting of said coupling members.

In an embodiment of a swiveling body according to the invention, the collar, as viewed in a plane through the central axis, defines a collar angle (α) smaller than 45°. The projected surface of the collar transversely to the axial force is so favorable due to the large curvature radius that the size of the collar can be limited, which is advantageous with regard to material use and the volume required to incorporate the entire swiveling body.

In an embodiment of the swiveling body according to the invention, the collar comprises an anti-wear element, said anti-wear element preferably comprising nylon or copper. Such an anti-wear element is preferably provided on a bearing surface of the collar.

In an embodiment of a swiveling body according to the invention, said swiveling body further comprises a bearing journal which extends along the central axis and is centered essentially around the central axis.

In an embodiment of a swiveling body according to the invention, the outer surface of the collar near the surrounding pipe wall defines a sharp angle (β) in relation to the central axis of more than 45°.

To this end, the invention further provides a ring assembly for a swiveling body according to the invention, wherein the ring assembly comprises at least two ring members, each provided with a flange in order to mutually connect said ring members.

In an embodiment, the ring assembly further comprises an annular collar running around the central axis of the ring assembly which engages the collar, wherein the collar and the annular collar each have a mutually corresponding curvature radius.

To this end, the invention further provides a pipe-end suitable for serving as a coupling member in a swiveling body according to the invention, wherein said pipe-end is provided with a integrally-formed collar.

In an embodiment, the pipe-end further comprises a ball segment or a cupular member, wherein the curvature radius of the collar is larger than the radius of the ball segment and the cupular member.

To this end, the invention further provides a method for assembling a swiveling body according to the invention, comprising the steps of:
- mutual coupling the collared ends of the coupling members,
- sliding the ring elements over said coupling members in the direction of the collared ends,
- mutual coupling the ring elements to form a ring assembly.

The invention further provides the use of a swiveling body in a pressure conduit.

The invention further provides a device provided with one or more of the characteristic features shown and/or described in the accompanying description and/or drawings.

The invention further provides a method comprising one or more of the characteristic steps disclosed in the accompanying description and/or drawings.

It will be evident that the various aspects set forth in this patent application may be combined and that each can be considered independently for the purpose of a divisional patent application.

### Brief description of the figures

The accompanying figures show various embodiments of a swiveling body in which:
Fig. 1 is a schematic diagram in perspective of a dredging vessel with a swiveling body in use;
Fig. 2 shows a swiveling body with bend, provided with a bearing journal;
fig. 3a shows a cross-sectional view of a known swiveling body;
fig. 3b shows the swiveling body from fig. 3a in a swiveled position;
fig. 4 shows a perspective view of the swiveling body from fig. 3a-b;
Fig. 5a shows a cross-sectional view of a swiveling body according to the invention;
fig. 5b shows the swiveling body from fig. 5a in a swiveled position;
fig. 6 shows a perspective view of the swiveling body of fig. 5a-b.

### Description of embodiments

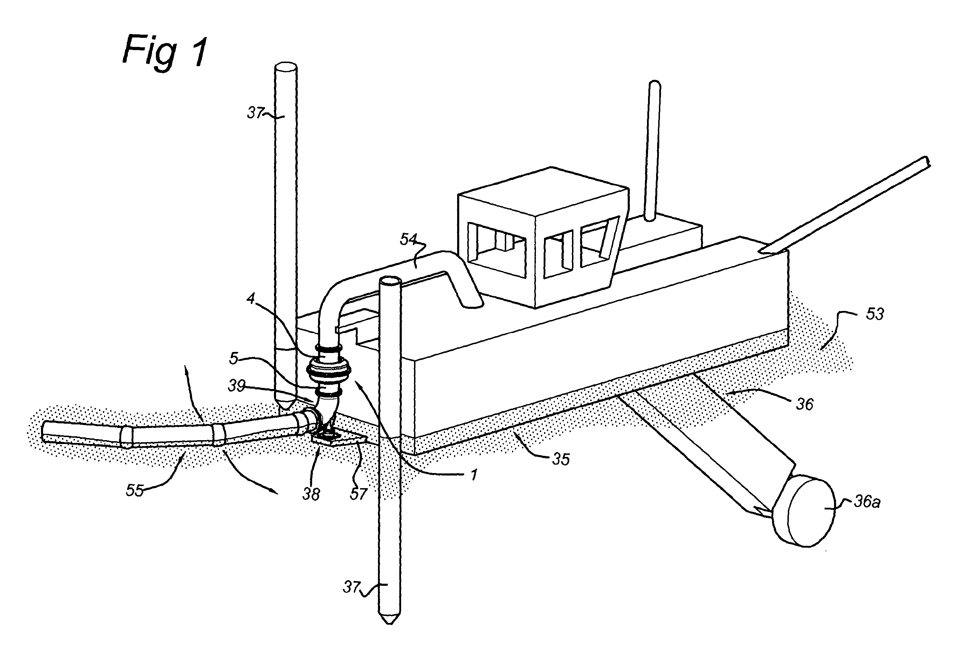

Figure 1 shows a schematic diagram in perspective of a dredging vessel 35 with a swiveling body 1, according to the invention, in use. The dredging vessel 35 loosens dredge spoil from the bedding with the use of the cutter head 36a. The dredge spoil is transported to a final destination, such as, for example a dumping ground, , by means of a suction pipe 36 and transport pipe 54, 55. The vessel rolls, sways and pitches on the water thereby pivoting around mooring post 37. The vessel part 54 of the transport pipe 54, 55 therefore moves in relation to the transport pipe section 55 which floats on the water surface 53. The swiveling body 1 enables the pivoting of the transport pipe sections 54, 55 along the horizontal plane. The coupling members 4, 5 mutually pivot around a vertical axis at an angle, which in practice is 180°, for example. The bend piece 39, which connects the swiveling body 1 with the transport pipe section 55, is provided with a pivot which rests pivotably in a pivot support 38. Among other things, the pivot serves to transmit and distribute the axial forces exerted on the transport pipe 55.

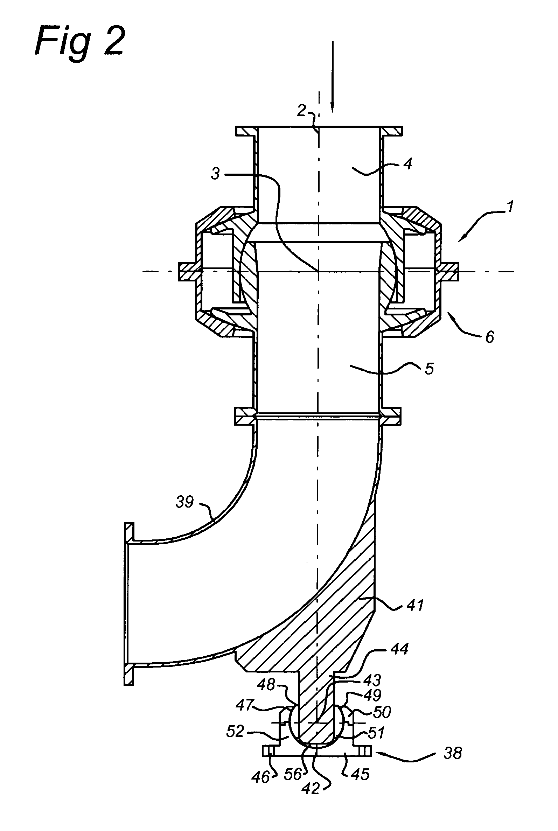

Fig. 2 shows the swiveling body 1 in conjunction with the bend piece 39. The bend piece 39 is provided with a pivot 41 and a pivoting point 44. The bend piece 39 is fixedly and fluidtightly connected with coupling member 5 and can therefore pivot around the vertical axis 42. The bend piece 39, in conjunction with downstream coupling member 5, is pivotable around the vertical axis 42, independent of upstream coupling member 4. Said coupling member 4 is pivotable around the central axis 2. The swiveling body 1 fluidtightly connects the coupling members 4, 5 in order to feed a fluid under pressure. The bend piece 39 is fluidtightly connected to the transport pipe 55 of fig. 1. When the dredging vessel 35 and the transport pipe 55 mutually pivot around a substantially vertical axis, coupling members 4 and 5 will mutually pivot. In practice, the mutual alignment of the central axis 2 and the vertical axis 42 will vary. A result of this variation is that the mutual rotation of the coupling members 4, 5 around the vertical axis will also make both coupling members rotate around a horizontal axis at a certain angle. The swiveling body 1 permits the coupling members 4, 5 to rotate mutually around both of these axes. The required freedom of rotation around the horizontal axis is less than 5°, for example.

A collar step bearing 38 is provided in order to improve and optimize the mutual alignment of the central axis 2 and the vertical axis 42. The collar step bearing 38 and the bearing journal 44 are mutually pivotably connected. This mutual ability to pivot enables the collar step bearing 38 to slide along the horizontal plane and to further individually align the central axis 2 and the vertical axis 42. The collar step bearing 38 is provided with a housing 56 in the pedestal 45. This housing 56 is defined by a surrounding wall 52 with a curvature 51. A cylindrical bearing bush 48 is incorporated in the housing 56 with a correspondingly curved outer circumference 47 in order for the bearing bush 48 to remain pivotable around a centre 43 in the housing 56. A closing ring 50 is positioned opposite the surrounding wall 52, also with a corresponding curvature 49. The closing ring 50 serves to seal the bearing bush 48 in the housing 56. The bearing bush 48 here is rotatably connected around axis 42 to a bearing journal 44. It is conceivable that the bearing bush 48 is connected by means of loose fit to the bearing journal 44. After mutual aligning of the central axis 2 and the vertical axis 42, the collar step bearing 38 is mounted onto the support 57 shown in figure 1, which is connected to the vessel 35. To this end, the pedestal 45 here is provided with mounting holes 46.

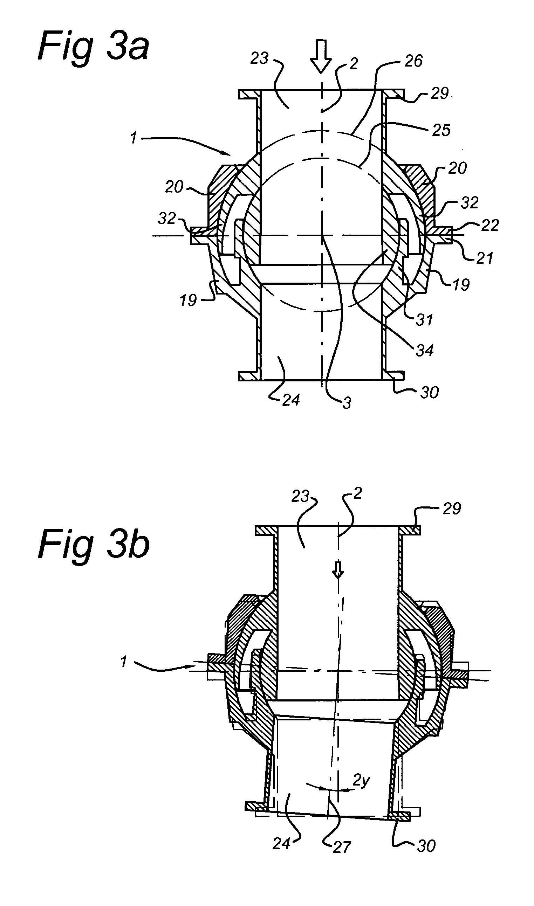

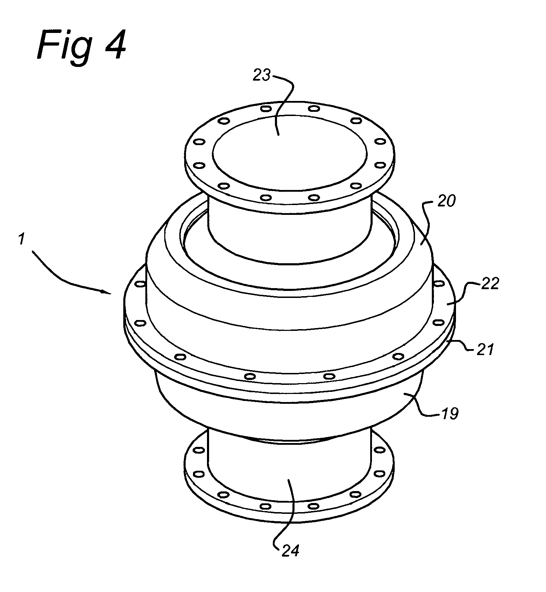

Figures 3a-b and 4 show a known swiveling body 1 in various views and positions. The swiveling body 1 enables pipe sections 23, 24 or coupling members 23, 24 to swivel mutually. The pipe sections 23, 24 are provided with surrounding weld-neck flanges 29, 30 intended for connecting to other pipes. The swiveling body 1 extends along the central axis 2. The coupling members 23, 24 can be pivoted around a central pivoting point 3. The arrow indicates the direction of flow through the pressure conduit. The upstream coupling member 23 is provided at its downstream end with a ball segment 34. The outer circumference of the ball segment 34 lies on an imaginary circle 25. A surrounding ball socket 32 is provided near to and upstream of the ball segment 34. The outer circumference of the ball socket 32 lies on an imaginary circle 26. The ball socket 32 encompasses a large proportion of the ball segment 34. The downstream coupling member 24 is provided at its upstream end with a ball-joint socket 31. The inner circumference of the ball-joint socket 31 lies on an imaginary circle 25. An outer surrounding shell 19 is provided near to and downstream from the ball-joint shell 31. The inner circumference of the outer shell 19 lies on an imaginary circle 26. The outer shell 19 comprises a large portion of the ball-joint shell 31. The ball segment 34 is retained in the ball-joint socket 31 and together form a ball-joint or linkage. It is conceivable that the ball-joint is provided with lubricants, bearings (not all shown) between the outer surface of the ball segment 34 and the inner surface of the ball-joint socket 31 in order to lubricate said ball-joint and to facilitate swiveling. More importantly, the ball segment 34 and ball-joint socket 31 are both sealingly connected in order to allow the passage of a fluid, such as dredging spoil.

A closing ring 20 is provided in order to absorb the axial and radial forces which result, among other things, from the pressure in the pressure conduit. The sealing ring 20 is mounted to the outer shell 19, for example by means of a flange 21, 22. The inner surface of the sealing ring 20 engages with the outer circumference of the shell 32. The inner circumference of the sealing ring 20 lies on an imaginary circle 26. Preferably, lubricants (not shown) and the like are also provided between the inner surface of the sealing ring 20 and the outer surface of the shell 32. Axial forces are transmitted through the outer shell 19, sealing ring 20 and shell 32 successively, whereby the permissible axial load of the swiveling body is determined by the surface projected onto a plane perpendicular to the central axis. Fig. 3b shows both coupling members 23, 24 individually pivoted, wherein the central axis 27 of coupling member 24 lies at an angle 2γ in relation to the central axis 2.

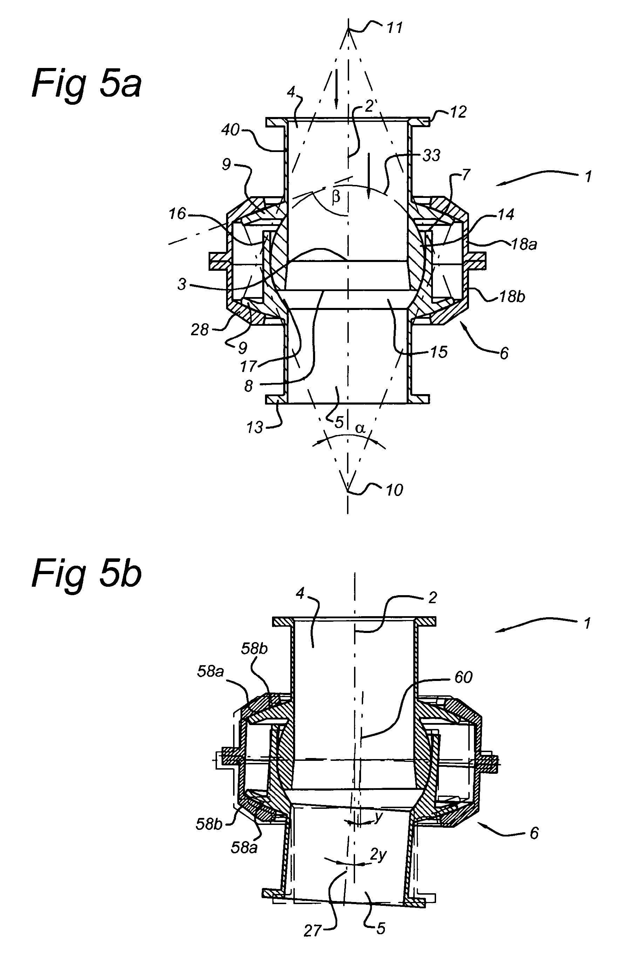

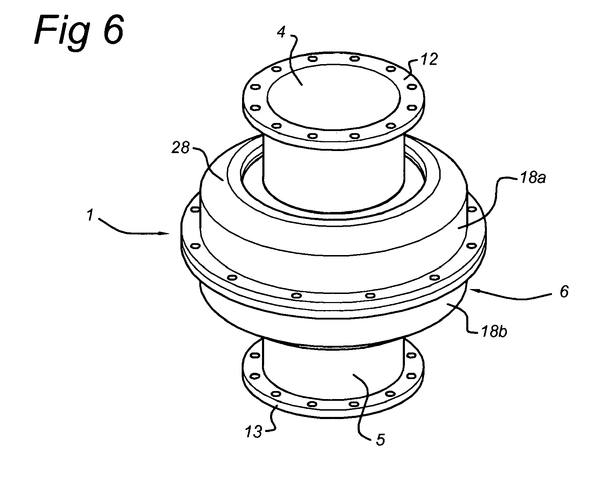

Figures 5a-b and 6 show various views and positions of a swiveling body 1 according to the invention. The swiveling body 1 enables pipe sections 4, 5 or coupling members 4, 5 to swivel mutually. The coupling members 4, 5 are provided with surrounding (weld-neck) flanges 12, 13 intended for coupling with other pipes. The swiveling body 1 extends along the central axis 2. The coupling members 4, 5 are pivotable around a central pivoting point 3. The arrow indicates the direction of flow through the pressure conduit. The upstream coupling member 4 is provided on its downstream end 8 with a ball segment 14. The outer circumference of the ball segment 14 lies on an imaginary circle 33. A surrounding collar 9 is provided near to and upstream from the ball segment 14. The collar 9 has a curvature radius whose centre 10 lies beyond the centre 3, i.e. downstream therefrom. The downstream coupling member 5 is provided at its upstream end 7 with a linkage socket 15. The inner circumference of the linkage socket 15 lies on an imaginary circle 33. A surrounding flange 9 is provided near to and downstream from the linkage socket 15. The collar 9 has a curvature radius whose centre 11 lies beyond the centre 3, i.e. upstream therefrom. The ball segment 14 is retained in the linkage socket 15 and together they form a ball-joint or linkage. The ball-joint 14, 15 mainly distributes radial forces. Preferably, the ball joint is provided with lubricants, bearings (not all shown) between the outer surface of the ball segment 14 and the inner surface of the linkage-socket 15 in order to lubricate said ball-joint and to facilitate swiveling. A ring assembly 6 is provided in order to absorb axial forces as a result of the pressure in the pressure conduit. Here, the ring assembly 6 consists of two ring elements 18a, 18b which are slide over the coupling members 4, 5 and mutually connected. It is conceivable that the ring assembly 6 is composed of a single part. Here, the ring assembly is provided with ring collars 28 with a curvature radius corresponding to the curvature radius of the collar 9. The collar 9 and the ring collar 28 engage each other in order to distribute axial forces resulting from the pressure in the pressure conduit. The inner surface 58b of the ring collar 28 engages with the outer surface 58a of the collar 9. Preferably, lubricants, bearings, insert parts (not shown) etc. are also provided between the inner surface of the ring collar 28 and the outer surface of the collar 9. Axial forces are successively distributed by collar 9, ring collars 28 and again by collar 9. Radial forces are mainly distributed by the ball-joint 14, 15. In this manner, the swiveling body according to the invention provides a seperation of functions, so that each of these functions can be individually optimized during the design process. The inner surface 58b of the ring collar 28 engages with the outer surface 58a of the collar 9 at a relatively small angle in comparison to the existing swiveling body of figures 3-4. This has a positive outcome on the use of materials, the number of insert elements, the use of lubricants and the size of the provisions therefor. Fig. 5b shows the coupling members 4, 5 mutually pivoted whereby the central axis 27 of coupling member 5 lies at an angle 2γ in relation to the central axis 2. The figure also shows that the ring assembly with its central axis 60 pivots and slides in relation to the central axis 2. The ring assembly assumes its own position, as it were, that complies with a load and/or mutual position of the coupling members 4, 5. When the coupling members 4, 5 both pivot at an angle 2γ, theoretically the central axis 60 of the ring assembly pivots at an angle γ in relation to the central axis 2. The overlap between coupling member 4, 5 and the ring assembly can therefore be considerably smaller, which is advantageous to material use and the space required to incorporate the swiveling body.

It will be evident that the above description is included in order to illustrate the operation of the preferred embodiments of the invention and not to restrict the scope of the invention. Based upon the foregoing description, those skilled in the art will be readily aware of alternative embodiments which fall within the spirit and scope of the present invention.

### List with reference numerals

- 1.: Swiveling body
- 2.: Central axis
- 3.: Central pivoting point (point of rotation)
- 4.: Upstream coupling member
- 5.: Downstream coupling member
- 6.: Ring assembly
- 7.: Upstream end
- 8.: Downstream end
- 9.: Surrounding collar
- 10.: Centre of curvature radius
- 11.: Centre of curvature radius
- 12.: Surrounding flange (weld- neck)
- 13.: Surrounding flange (weld- neck)
- 14.: Ball segment
- 15.: Ball-joint shell/linkage-socket
- 16: Cylindrical member
- 17.: Cupular member
- 18a, b: Ring member
- 19.: Outer shell
- 20.: Closing ring
- 21.: Flange
- 22.: Flange
- 23.: Upstream coupling member
- 24.: Downstream coupling member
- 25.: Imaginary circle
- 26.: Imaginary circle
- 27.: Central axis
- 28.: Annular collar
- 29,: Surrounding flange (weld-
- 30.: neck)
- 31.: Linkage socket/ball-joint shell
- 32.: Cup
- 33.: Imaginary circle
- 34.: Ball segment
- 35.: Dredging vessel
- 36.: Suction pipe
- 36a.: Cutter head
- 37.: Mooring post
- 38.: Collar step bearing
- 39: Bend section
- 40.: Surrounding pipe wall
- 41.: Bearing journal
- 42.: Vertical axis
- 43.: Centre
- 44.: Bearing journal
- 45.: Pedestal
- 46.: Mounting hole
- 47.: Outer circumference bearing bush
- 48.: Bearing bush
- 49.: Outer circumference bearing bush
- 50.: Curvature of closing ring
- 51.: Wall curvature
- 52.: Surrounding wall
- 53.: Water surface
- 54.: Transport pipe section
- 55.: Transport pipe section
- 56.: Accommodation/housing
- 57.: Support
- 58a.: Outer surface of collar
- 58b.: Inner surface of annular collar
- 60.: Central axis of ring assembly

## Claims

1. Swiveling body (1) for a pressure conduit for transporting dredge mixture from a dredging vessel, via a floating pipe section, to a final destination such as a dumping ground, wherein the swiveling body (1) extends along a central axis (2) and swivels around a central pivoting point (3) on the central axis (2), wherein the swiveling body (1) comprises an upstream coupling member (4) and a downstream coupling member (5) with their respective downstream end (8) and upstream end (7) being mutually pivotably connected by means of a ring assembly (6), wherein the ring assembly (6) is pivotable in relation to both coupling members (4, 5), **characterised in that** a respective coupling member (4, 5) is provided near a pipe wall (40) on the outer perimeter of the pipe wall (40) with a surrounding collar (9) substantially within the ring assembly (6), wherein the collar (9) has a curvature radius and the respective centre (10, 11) of the curvature radius lies on the central axis (2), beyond the central point of rotation (3).

2. Swiveling body according to claim 1, wherein both coupling members (4, 5) are provided near their pipe wall (40) with a surrounding collar (9) substantially within the ring assembly (6).

3. Swiveling body according to any preceding claim, wherein the ring assembly (6) is slidable in relation to both coupling members (4, 5) substantially transversely in relation to the central axis (2).

4. Swiveling body (1) according to any preceding claim, wherein the swiveling body (1) further comprises:
- a ball segment (14) within the ring assembly (6) and fixedly connected to a coupling member (4, 5),
- an accommodation (15) fixedly connected to the other coupling member (4, 5) with a cupular member (17) for accommodating the ball segment (14) therein,
wherein the ball segment (14) defines, in conjunction with the accommodation (15), the central pivoting point around which the coupling members (4, 5) are pivotable.

5. Swiveling body (1) according to claim 4, wherein the accommodation (15) further comprises, a cylindrical member (16) for guiding the ball segment (14) towards the cupular member (17).

6. Swiveling body (1) according to any preceding claim, wherein the radius of the pressure conduit is smaller than the radius of the ball segment (14), and the radius of the ball segment (14) is smaller than the curvature radius of the collar (9).

7. Swiveling body (1) according to any preceding claim, wherein the collar (9), as viewed along a plane through the central axis (2), defines a collar angle (α) smaller than 45°.

8. Swiveling body (1) according to any preceding claim, further comprising a bearing journal (44) which extends along its central axis (42) and is substantially centered around the central axis (2).

9. Swiveling body (1) according to any preceding claim, wherein the outer surface (58a) of the collar (9) near the surrounding pipe wall defines a sharp angle (β) in relation to the central axis (2) of more than 45°.

10. Method for assembling a swiveling body (1) according to any preceding claim, comprising the steps of;
- mutual coupling the collared ends of the coupling members (4, 5),
- sliding the ring members (18a, 18b) over the coupling members (4, 5) in the direction of the collared ends,
- mutual coupling the ring members (18a, 18b) to form a ring assembly (6).

11. Use of the swiveling body (1) according to any of the preceding claims, in a pressure conduit (54, 55).

## Patentansprüche

1. Schwenkkörper (1) für eine Druckleitung zum Transportieren einer Baggermischung von einem Baggerschiff über einen schwimmenden Rohrabschnitt zu einem Endbestimmungsort wie einer Deponie, wobei sich der Schwenkkörper (1) längs einer zentralen Achse (2) erstreckt und um einen zentralen Drehpunkt (3) auf der zentralen Achse (2) dreht, wobei der Schwenkkörper (1) ein stromaufwärtiges Kupplungselement (4) und ein stromabwärtiges Kupplungselement (5) umfasst, die mit ihrem jeweiligen stromabwärtigen Ende (8) und stromaufwärtigen Ende (7) gegenseitig mittels einer Ringanordnung (6) gegenseitig drehbar verbunden sind, die Ringanordnung (6) ist in Bezug auf die beiden Kupplungselemente (4, 5) drehbar, **dadurch gekennzeichnet, dass** ein jeweiliges Kupplungselement (4, 5) nahe einer Rohrwand (40) am Außenumfang der Rohrwand (40) im Wesentlichen innerhalb der Ringanordnung (6) mit einem umgebenden Kragen (9) versehen ist, wobei der Kragen (9) einen Krümmungsradius hat und das jeweilige Zentrum (10, 11) des Krümmungsradius auf der zentralen Achse (2) außerhalb des zentralen Drehpunkts (3) liegt.

2. Schwenkkörper nach Anspruch 1, wobei beide Kupplungselemente (4, 5) in der Nähe ihrer Rohrwand (40) mit einem im Wesentlichen innerhalb der Ringanordnung (6) befindlichen umgebenden Kragen (9) versehen sind.

3. Schwenkkörper nach einem der voranstehenden Ansprüche, wobei die Ringanordnung (6) in Bezug auf beide Kupplungselemente (4, 5) im Wesentlichen transversal in Bezug auf die zentrale Achse (2) verschiebbar ist.

4. Schwenkkörper (1) nach einem der voranstehenden Ansprüche, wobei der Schwenkkörper (1) weiter umfasst:
- ein innerhalb der Ringanordnung (6) befindliches und fest mit einem der Kupplungselemente (4, 5) verbundenes Kugelsegment (14),
- eine fest mit dem anderem Kupplungselement (4, 5) verbundene Aufnahme (15) mit einem becherförmigen Element (17) zur Aufnahme des Kugelsegments (14),
wobei das Kugelsegment (14) in Verbindung mit der Aufnahme (15) den zentralen Drehpunkt, um den sich die Kupplungselemente (4, 5) drehen lassen, definiert.

5. Schwenkkörper (1) nach Anspruch 4, wobei die Aufnahme (15) weiter ein Zylinderelement (16) zum Führen des Kugelsegments (14) zu dem becherförmigen Element (17) umfasst.

6. Schwenkkörper (1) nach einem der voranstehenden Ansprüche, wobei der Radius der Druckleitung kleiner ist als der Radius des Kugelsegments (14), und der Radius des Kugelsegments (14) kleiner als der Krümmungsradius des Kragens (9) ist.

7. Schwenkkörper (1) nach einem der voranstehenden Ansprüche, wobei der Kragen (9) entlang einer Ebene durch die zentrale Achse (2) gesehen einen Kragenwinkel (α) kleiner als 45° definiert.

8. Schwenkkörper (1) nach einem der voranstehenden Ansprüche, weiter umfassend einen Lagerzapfen (44), der sich längs seiner zentralen Achse (42) erstreckt und im Wesentlichen um die zentrale Achse (2) zentriert ist.

9. Schwenkkörper (1) nach einem der voranstehenden Ansprüche, wobei die äußere Oberfläche (58a) des Kragens (9) nahe der umgebenden Rohrwand einen scharfen Winkel (β) in Bezug auf die zentrale Achse (2) von mehr als 45° definiert.

10. Verfahren zum Zusammenbau eines Schwenkkörpers (1) nach einem der voranstehenden Ansprüche, umfassend die Schritte:
- gegenseitiges Kuppeln der mit Kragen versehenen Enden der Kupplungselemente (4, 5)
- Verschieben der Ringelemente (18a, 18b) über die Kupplungselemente (4, 5) in Richtung der mit Kragen versehenen Enden,
- gegenseitiges Kuppeln der Ringelemente (18a, 18b) zur Ausbildung einer Ringanordnung (6).

11. Verwendung eines Schwenkkörpers (1) nach einem der voranstehenden Ansprüche bei einer Druckleitung (54, 55).

## Revendications

1. Corps pivotant (1) pour une conduite sous pression destinée au transport d'un mélange de dragage à partir d'un vaisseau de dragage via un tronçon de canalisation flottante à une destination finale telle qu'une décharge, dans lequel le corps pivotant (1) s'étend le long d'un axe central (2) et pivote autour d'un point de pivotement central (3) sur l'axe central (2), dans lequel le corps pivotant (1) comprend un élément de couplage d'amont (4) et un élément de couplage d'aval (5), leurs extrémités d'aval (8) et extrémités d'amont (7) respectives étant mutuellement reliées de manière à pouvoir pivoter à l'aide d'un ensemble annulaire (6), dans lequel l'ensemble annulaire (6) peut être pivoté par rapport aux deux éléments de couplage (4, 5), **caractérisé en ce qu'**un élément de couplage respectif (4, 5) est prévu près d'une paroi de canalisation (40) sur le périmètre extérieur de la paroi de canalisation (40) avec une embase périphérique (9) sensiblement dans l'ensemble annulaire (6), dans lequel l'embase (9) présente un rayon de courbure et le centre respectif (10, 11) du rayon de courbure se situe sur l'axe central (2), au-delà du point de rotation central (3).

2. Corps pivotant selon la revendication 1, dans lequel les deux éléments de couplage (4, 5) sont prévus près de leur paroi de canalisation (40) avec une embase périphérique (9) sensiblement dans l'ensemble annulaire (6).

3. Corps pivotant selon l'une quelconque des revendications précédentes, dans lequel l'ensemble annulaire (6) peut coulisser par rapport aux deux éléments de couplage (4, 5) de manière sensiblement transversale par rapport à l'axe central (2).

4. Corps pivotant (1) selon l'une quelconque des revendications précédentes, dans lequel le corps pivotant (1) comprend en outre :
- une portion formant boule (14) située dans l'ensemble annulaire (6) et relié fixement à un élément de couplage (4, 5),
- un logement (15) relié fixement à l'autre élément de couplage (4, 5) avec un élément en forme de coupe (17) pour le logement de la portion formant boule (14) dedans,
dans lequel la portion formant boule (14) définit, conjointement avec le logement (15), le point de pivotement central, autour duquel les éléments de couplage (4, 5) peuvent pivoter.

5. Corps pivotant (1) selon la revendication 4, dans lequel le logement (15) comprend en outre un élément cylindrique (16) pour le guidage de la portion formant boule (14) vers l'élément en forme de coupe (17).

6. Corps pivotant (1) selon l'une quelconque des revendications précédentes, dans lequel le rayon de la conduite sous pression est inférieur au rayon de la portion formant boule (14), et le rayon de la portion formant boule (14) est inférieur au rayon de courbure de l'embase (9).

7. Corps pivotant (1) selon l'une quelconque des revendications précédentes, dans lequel l'embase (9), vue le long d'un plan traversant l'axe central (2), définit un angle d'embase (α) inférieur à 45°.

8. Corps pivotant (1) selon l'une quelconque des revendications précédentes, comprenant en outre un tourillon (44) qui s'étend le long de son axe central (42) et est sensiblement centré autour de l'axe central (2).

9. Corps pivotant (1) selon l'une quelconque des revendications précédentes, dans lequel la surface extérieure (58a) de l'embase (9) près de la paroi de canalisation environnante définit un angle aigu (β) par rapport à l'axe central (2) supérieur à 45°.

10. Procédé d'assemblage d'un corps pivotant (1) selon l'une quelconque des revendications précédentes, comprenant les étapes suivantes :
- couplage mutuel des extrémités à embase des éléments de couplage (4, 5),
- coulissement des éléments annulaires (18a, 18b) sur les éléments de couplage (4, 5) dans la direction des extrémités à embase,
- couplage mutuel des éléments annulaires (18a, 18b) pour former un ensemble annulaire (6).

11. Utilisation du corps pivotant (1) selon l'une quelconque des revendications précédentes, dans une conduite sous pression (54, 55).
